# EUROPÄISCHE PATENTANMELDUNG

(11) **EP 2 153 971 A2**
(43) Veröffentlichungstag der Anmeldung: **17.02.2010**
(21) Anmeldenummer: 09010566.9
(22) Anmeldetag: 17.08.2009
(51) Int. Cl.: B29C 47/90, B29C 47/88

(54) **Extrusionslinie für Rohre aus Kunststoff**

(30) Priorität: 15.08.2008 DE 102008037874
(71) Anmelder: IBA GmbH, 32547 Bad Oeynhausen (DE)
(72) Erfinder: Klose, Reinhard, 31737 Rinteln (DE); Schmuhl, Jörg, Dr., 15711 Königs Wusterhausen (DE)
(74) Vertreter: Seewald, Jürgen

(57) **Zusammenfassung**

Die vorliegende Erfindung betrifft eine Extrusionslinie für Kunststoffrohre mit einer in einem Vakuumtank (8) angeordneten Kalibriervorrichtung (9) und mindestens einer sich daran in Extrusionsrichtung anschließenden Stützvorrichtung (18) mit einer an den Außendurchmesser eines jeweilig extrudierten Rohres anpassbaren Stützkontur, sowie mit einer Sprühdüsen (16) aufweisenden Kühleinrichtung (14) zur Außenkühlung des Rohres (5). Aufgabe der Erfindung ist es, eine weitere derartige Stützvorrichtung für extrudierte Rohre zur Verfügung zu stellen, die eine Unterstützung eines extrudierten Rohres über eine lange axiale Wegstrecke ermöglicht. Gelöst wird diese Aufgabe dadurch, dass die Stützvorrichtung (18) ein axial stauch- und ausziehbares Mittelstück (19) aufweist, das aus einem ersten und zweiten Satz flexibler Bänder(20, 21) gebildet ist, die schräg zur Längsachse des extrudierten Rohres (5) verlaufen und zumindest in einem Teilbereich des Außenumfanges am Rohr (5) anliegen, wobei sich die Bänder (20, 21) des ersten und zweiten Satzes nach Art eines Scherengitters kreuzen und an den Kreuzungspunkten gelenkig miteinander verbunden sind.

## Beschreibung

Die vorliegende Erfindung betrifft eine Extrusionslinie für Rohre aus Kunststoff gemäß dem Oberbegriff des Anspruchs 1.

Eine derartige Extrusionslinie für Rohre aus Kunststoff mit mindestens einer sich an die Kalibriervorrichtung anschließenden Stützvorrichtung für ein extrudiertes Rohr ist aus der DE 10 2004 059 515 B3 bekannt. Die Stützvorrichtung dieser Extrusionslinie besteht aus einem Zylinderabschnitt mit einer an den Querschnitt eines jeweiligen extrudierten Rohres angepassten Aufnahme zur linienförmigen Teilumfassung des Rohrumfangs. Diese Aufnahme ist als eine in Umfangsrichtung des Zylinderabschnitts verlaufende Rinne ausgebildet, deren Breite sich von einem Ende zum anderen Ende des Zylinderabschnitts in Anpassung an verschiedene Durchmesser des Rohres konisch vergrößert. Der Zylinderabschnitt ist um eine quer zu der Rinne angeordneten Schwenkachse drehbar gelagert, um die Vorrichtung auf die jeweils produzierte Rohrgröße einstellen zu können. Diese aus dem Stand der Technik bekannte Stützvorrichtung ermöglicht eine einfache, stufenlose Anpassung an die in einer Extrusionslinie gefahrenen Rohrdimensionen bei kontinuierlicher Teilumfassung des Rohrumfangs. Des weiteren ist sie als Ausrüstung für einen Dimensionswechsel bei laufender Produktion geeignet.

Ein Nachteil der oben beschriebenen, aus dem Stand der Technik bekannten Stützvorrichtung ist darin zu sehen, dass die Unterstützung der extrudierten Rohre in axialer Richtung nur auf einer sehr kurzen Wegstrecke erfolgt. Diesen Nachteil weisen auch andere aus dem Stand der Technik bekannte Stützvorrichtungen auf, wie z. B. die in der DE 10 2005 028 086 A1 beschriebene Stützvorrichtung.

Aufgabe der vorliegenden Erfindung ist es daher, eine weitere gattungsgemäße Stützvorrichtung für extrudierte Rohre zur Verfügung zu stellen, die eine Unterstützung eines extrudierten Rohres über eine lange axiale Wegstrecke ermöglicht.

Diese Aufgabe wird erfindungsgemäß mit einer Extrusionslinie für Rohre aus Kunststoff gelöst, die die Merkmale des Anspruchs 1 aufweist.

Die Stützvorrichtung der vorliegenden Erfindung ist stufenlos auf den Durchmesser eines jeweilig extrudierten Rohres einstellbar. Das geschieht durch axiales Stauchen oder Ausziehen des Mittelstücks. Beim axialen Stauchen des Mittelstücks vergrößert sich dessen Durchmesser, während sich dessen Länge verkürzt. Durch Ausziehen des Mittelstücks verringert sich dessen Durchmesser bei gleichzeitiger Verlängerung des Mittelstücks. Obwohl der axiale Stützbereich der Stützvorrichtung bei größeren Durchmessern geringer ist als bei kleineren Durchmessern, ist er bei allen eingestellten Rohrdurchmessern aber wesentlich länger als bei den aus dem Stand der Technik bekannten Stützvorrichtungen. Dadurch kann die Qualität des extrudierten Kunststoffrohres positiv beeinflusst werden.

In vorteilhafter Weiterbildung der Erfindung ist die Stützvorrichtung als Halbschale ausgeführt, d.h., sie umfaßt ein extrudiertes Rohr auf einem Teilumfang von 180°, und bietet damit eine ideale Rohrunterstützung.

In weiterer vorteilhafter Ausgestaltung der Erfindung sind die Sprühdüsen der Kühleinrichtung an der Stützvorrichtung befestigt. Sie haben daher, unabhängig vom eingestellten Rohrdurchmesser immer den gleichen Abstand zur Rohroberfläche, da sie sich mit der Stützvorrichtung bei deren Verstellung synchron radial mitbewegen. Auf diese Weise wird die Rohroberfläche zur Kühlung immer optimal benetzt. Nach dem Stand der Technik sind die Sprühdüsen stationär eingebaut, so dass ein optimaler Abstand zur Rohroberfläche nur bei einem bestimmten Rohrdurchmesser gegeben ist.

Weitere zweckmäßige Ausgestaltungen der Erfindung ergeben sich aus den übrigen Unteransprüchen.

Die Erfindung wird nachstehend anhand von Ausführungsbeispielen näher erläutert. In der dazugehörigen Zeichnung zeigt in schematischer Weise:
- Fig. 1: eine Seitenansicht einer Rohrextrusionslinie,
- Fig. 2: einen Längsschnitt durch den Vakuumtank der Rohrextrusionslinie nach einer ersten Ausführungsform der vorliegenden Erfindung,
- Fig. 3: einen vergrößerten Querschnitt A-A gemäß Fig. 2, und
- Fig. 4: einen vergrößerten Querschnitt A-A gemäß Fig. 2 nach einer zweiten Ausführungsform der vorliegenden Erfindung.

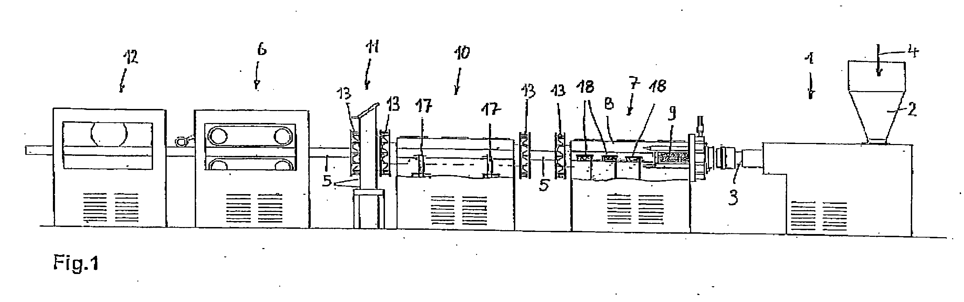

Die in Fig. 1 dargestellte Extrusionslinie dient der Herstellung von Kunststoffrohren 5. Sie umfasst eine Extrudereinheit 1 mit einem Aufgabetrichter 2, einer aus der Zeichnung nicht ersichtlichen Extruderschnecke und einem Rohrkopf 3. Ober den Aufgabetrichter 2 wird ein thermoplastischer Kunststoff 4 in Granulat- oder Pulverform der Extrudereinheit 1 zugeführt. In dieser wird das Granulat bzw. Pulver erwärmt, geknetet und plastifiziert. Anschließend wird der Kunststoff 4 als formbare Masse durch die Extruderschnecke in den Rohrkopf 3 gefördert und dort durch einen ringförmigen Austrittsspalt gedrückt.

Nach dem Austritt aus dem Rohrkopf 3 wird das heiße, noch verformbare Rohr 5 mittels eines am Ende der Extrusionslinie angeordneten Raupenabzugs 6 durch eine Kalibrier- und Kühleinheit 7 gezogen, die einen Vakuumtank 8 mit einer an dessen Eingang angeordneten Kalibrierhülse 9 aufweist. Die Kalibrierhülse 9 ist stufenlos im Durchmesser einstellbar, so dass das extrudierte, noch formbare Rohr 5 auf den gewünschten Durchmesser fixiert werden kann. In diesem Ausführungsbeispiel kommt beispielsweise eine Kalibrierhülse 9 zum Einsatz, wie sie in der DE 10 2005 002 820 B1 beschrieben ist. Es ist aber auch jede andere, für einen Dimensionswechsel bei laufendem Betrieb geeignete Kalibrierhülse einsetzbar.

Nach dem Verlassen der Kalibrier- und Kühleinheit 7 tritt das Rohr 5 in eine in einem Kühltank 10 gebildete Kühlstrecke ein, in der es auf etwa Raumtemperatur abgekühlt wird. Zwischen dem Kühltank 10 und dem Raupenabzug 6 ist ein Ultraschallscanner 11 angeordnet, durch den der Durchmesser und die Wanddicke des extrudierten Rohres 5 erfasst werden. Dem Raupenabzug 6 schließt sich eine Trennsäge 12 an, in der das Rohr 5 abgelängt wird. Zur Abdichtung der Kalibrier- und Kühleinheit 7, des Kühltanks 10 und des Ultraschallscanners 11 sind Dichtungen 13 vorgesehen, die das durchlaufende Rohr 5 abdichtend umschließen.

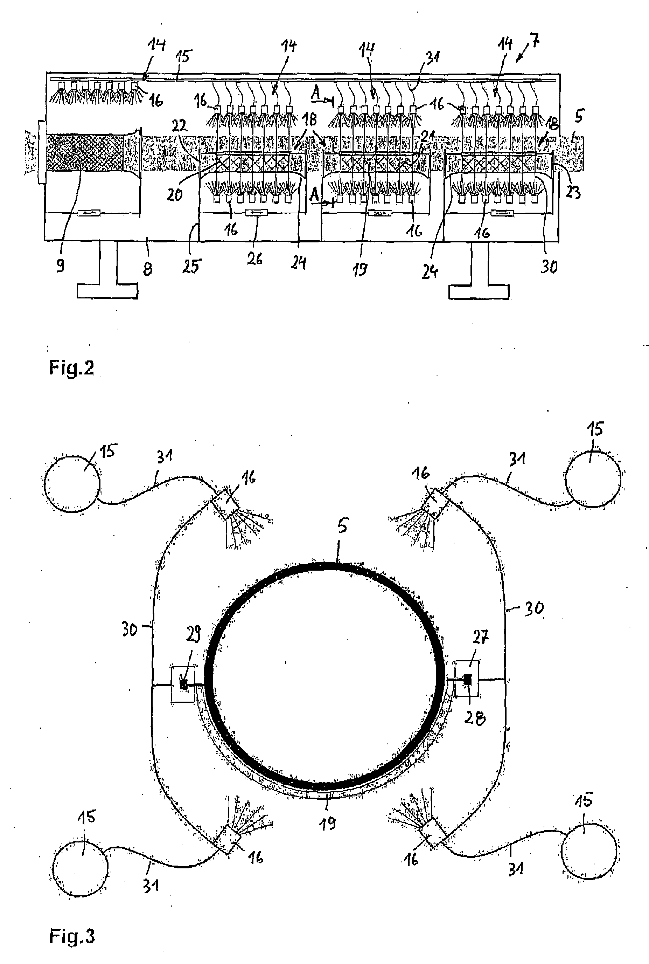

Der Vakuumtank 8 besitzt eine Kühlvorrichtung 14 mit Versorgungsleitungen 15 und Sprühdüsen 16 (Fig. 2). Der Wasserzulauf und Wasserablauf sowie der Vakuumanschluss für den Vakuumtank 8 sind nicht dargestellt.

Da das extrudierte Rohr 5 erst nach Verlassen des Kühltanks 10 ausgehärtet, d.h., formstabil ist, muss es zuvor abgestützt werden, um ein Durchhängen und damit Deformieren zu vermeiden. Dazu sind in dem Kühltank 10 zwei Stützvorrichtungen 17 und im Vakuumtank 8 drei Stützvorrichtungen 18 vorgesehen. Die Ausführung der Stützvorrichtungen 17 im Kühltank 10 entspricht dem Stand der Technik, wie er beispielsweise aus der WO 20041106034 A1 hervorgeht.

Der Aufbau und die Wirkungsweise der Stützvorrichtungen 18 im Vakuumtank 8 wird nachstehend anhand der Fig. 2 bis 4, die zwei verschiedene Ausführungsformen zeigen, näher erläutert.

In einer ersten, in den Fig. 2 und 3 dargestellten Ausführungsform sind die Stützvorrichtungen 18 als Halbschalen ausgeführt, d.h., sie umfassen ein extrudiertes Rohr 5 am Umfang um 180°. Die drei im Vakuumtank 8 angeordneten Stützvorrichtungen 18 sind identisch ausgeführt, so dass die nachfolgenden Ausführungen für alle drei Stützvorrichtungen 18 gelten.

Die Stützvorrichtung 18 besitzt ein Mittelstück 19, welches axial stauch- und ausziehbar ausgeführt ist. Das Mittelstück 19 besteht aus einem ersten Satz flexibler Bänder 20 und einem zweiten Satz flexibler Bänder 21, die schräg zur Längsachse des extrudierten Rohres 5 verlaufen. Sie kreuzen sich nach Art eines Scherengitters und sind an Kreuzungspunkten gelenkig miteinander verbunden. Die flexiblen Bänder 20 des ersten Satzes sind nur im Mittelstück 19 angeordnet, d,h., nur im Mittelstück 19 liegt ein Scherengitter vor. Die Bänder 21 des zweiten Satzes erstrecken sich über das Mittelstück 19 hinaus und ihre Enden sind jeweils gelenkig an einen halbringförmigen Einlaufkopf 22 bzw. Auslaufkopf 23 angeschlagen. Die Enden der flexiblen Bänder 21 bilden somit einen Übergangsabschnitt 24 vom Mittelstück 19 zu den beiden Köpfen 22 bzw. 23. Die Übergangsabschnitte 24 verlaufen je nach dem Auszugsgrad des Mittelstücks 19 mehr oder weniger stark konisch. In der in Fig.2 gezeigten Situation ist das Mttelstück 19 stark ausgezogen, so dass der Konus der Übergangsabschnitte 24 entsprechend stark ausgebildet ist.

Der in Richtung der Kalibrierhülse 9 weisende Einlaufkopf 22 ist über eine Wand 25 starr mit dem Vakuumtank 8 verbunden, währen der gegenüberliegende Auslaufkopf 23 der Stützvorrichtung 18 über einen motorischen Längenauszug 26 mit der Wand 25, an der der Einlaufkopf 22 starr gelagert ist, verbunden ist. Je nach Antriebsrichtung des Längenauszugs 26 kann der Auslaufkopf 23 unter Stauchung des Mittelstücks 19 zum Einlaufkopf 22 hin bzw. unter Ausziehung des Mittelstücks 19 von diesem weg verlagert werden.

Soweit es noch ergänzender Erläuterungen zum Aufbau und zur Funktion der Stützvorrichtungen 18 bedarf, wird auf die DE 103 18 137 B3 verwiesen, die zwecks weiterer Beschreibung der Stützvorrichtung 18 zum Gegenstand des Ausführungsbeispiels gemacht wird. Die in dieser Patentschrift beschriebene Kalibrierhülse entspricht in Bezug auf die flexiblen Bänder 20 und 21 sowie der Anbindung des Mittelstücks 19 an die Köpfe 22 und 23 in längshalbierter Ausführung der Stützvorrichtung 18.

Zur Stabilisierung der Stützvorrichtung 18 sind an den freien Längsrändern des Mittelstücks 19 Halteschienen 27 vorgesehen. Die Längsränder der Stützvorrichtung 18 sind in diesen Halteschienen 27 nach Art einer Kulissenführung gelagert. Dazu sind an den Kreuzungspunkten zwischen den Bändem 20, 21 radial nach außen abragende Vorsprünge 28 vorgesehen, die mit Hinterschnitt in einer axialen Nut 29 der Halteschienen 27 geführt sind.

An den Halteschienen 27 sind Halterungen 30 für die Sprühdüsen 16 der Kühlvorrichtung 14 befestigt. In dem vorliegenden Ausführungsbeispiel sind vier auf den Umfang des Rohres 5 verteilte Reihen von Sprühdüsen 16 vorgesehen. Für jede Reihe von Sprühdüsen 16 ist eine Versorgungsleitung 15 vorgesehen, wobei die einzelnen Sprühdüsen 16 über flexible Schläuche 31 mit den Versorgungsleitungen 15 verbunden sind. Da die Sprühdüsen 16 über die Halterungen 30 mit der Stützvorrichtung 18 verbunden sind, bleibt deren Abstand zur Oberfläche des Rohres 5 beim axialen Stauchen bzw. Ausziehen des Mittelstücks 19 immer gleich, so dass eine effektive Kühlung gegeben ist.

Aufgrund der schlechten Wärmeleitfähigkeit des Kunststoffes entsteht in der Rohrwandung ein Temperaturgefälle mit einer relativ niedrigen Oberflächentemperatur des Rohres 5 und einer höheren Temperatur auf der Innenseite des Rohres 5. Das führt zu einem schlechteren Wärmeübergang zwischen dem Rohr 5 und der Kühlflüssigkeit. Um dem entgegenzuwirken, sind zwischen den Stützvorrichtungen 18 sogenannte Temperstrecken vorgesehen, in denen keine Kühlung erfolgt. Diese Temperstrecken sorgen für einen Temperaturausgleich innerhalb der Rohrwandung, mit dem Effekt, dass sich die Rohraußenoberfläche wieder etwas erwärmt, wodurch der Wärmeübergang aufgrund der größeren Triebkraft (Temperaturgradient) in der nächsten Kühlstrecke erhöht wird.

In dem in Fig. 2 gezeigten Ausführungsbeispiel werden die einzelnen Stützvorrichtungen 18 jeweils über vier durchgehende Versorgungsleitungen 15 gleichmäßig mit einer Kühlflüssigkeit versorgt. In Fig.1 ist die Kühleinrichtung 14 aus Gründen der Übersichtlichkeit nicht dargestellt. Aus dem gleichen Grund ist in Fig.2 nur eine der Versorgungsleitungen 15 und deren Anbindung an die Sprühdüsen 16 gezeigt.

Zur Optimierung der Abkühlung des extrudierten Rohres 5 ist es zweckmäßig, die Versorgungsleitungen 15 zu segmentieren, d.h., jeder Stützvorrichtungen 18 einen separaten Wasserzulauf zuzuordnen. Dadurch kann die Kühlleistung von Stützvorrichtung 18 zu Stützvorrichtung 18 variiert werden. Des weiteren ist es in dieser Hinsicht zweckmäßig, eine Möglichkeit vorzusehen, einzelne Sprühdüsen 16 einer Stützvorrichtung 18 separat abschalten oder zuschalten zu können. Dadurch ist zum einen die Kühlleistung veränderbar, zum anderen die Länge der Temperabschnitte variierbar.

In dem Ausführungsbeispiel gemäß Fig. 2 sind die Sprühdüsen 16 im Bereich der Kalibrierhülse 9 direkt an den Versorgungsleitungen 15 angeordnet. Auch hier ist es abweichend davon möglich, wie bei den Stützvorrichtungen 18, Halterungen 30 vorzusehen, über die die Sprühdüsen 16 an den Bänderlagen der Kalibrierhülse 9 befestigt sind. Dadurch wird auch hier immer ein optimaler Abstand der Sprühdüsen 16 zum Rohr 5 erreicht.

Die oben beschriebenen Stützvorrichtungen 18 umfassen ein kalibriertes Rohr 5 in einem Umfangsbereich von 180° und bieten damit eine optimale Abstützung des Rohres 5. Für eine gute Gleitreibung sind die Kontaktflächen des Mittelstücks 19 mit dem Rohr 5 mit einer PTFE-Beschichtung versehen.

Die Stützvorrichtungen 18 sind über einen großen Einstellbereich im Durchmesser verstellbar und somit insbesondere für den Einsatz in Extrusionslinien geeignet, die für einen Dimensionswechsel bei laufendem Betrieb ausgelegt sind. Bei einem Dimensionswechsel können die Stützvorrichtungen 18 z. B. in Abhängigkeit von dem in der Kalibrierhülse 9 eingestellten Durchmesser sukzessive nacheinander auf die neue Rohrdimension eingestellt werden.

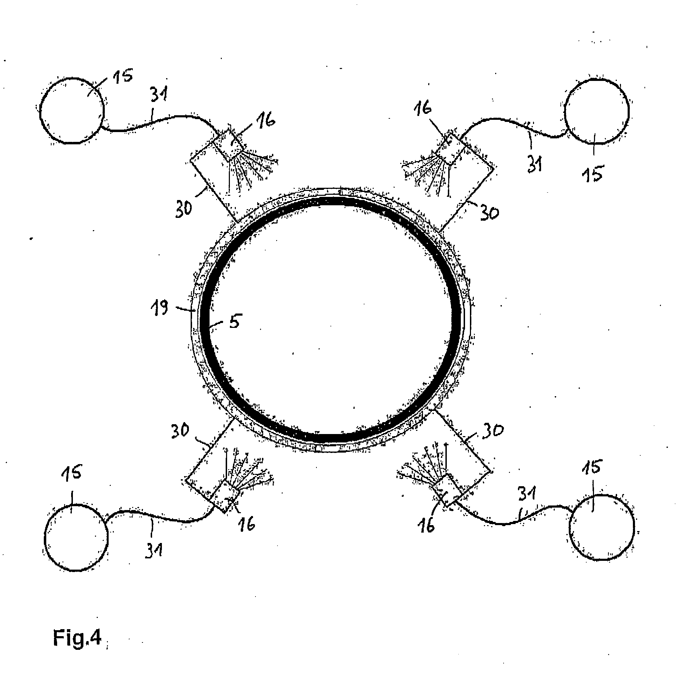

Das in Fig. 4 dargestellte Ausführungsbeispiel unterscheidet sich von dem vorhergehenden Ausführungsbeispiel dadurch, dass die Stützvorrichtung 18 als Vollschale ausgebildet ist, d. h., sie umgibt ein extrudiertes Rohr 5 auf 360° seines Umfanges, d.h., vollständig. In diesem Falle sind die Halterungen 30 für die Sprühdüsen 15 direkt an den Gelenkpunkten zwischen den Bändern 20 und 21 befestigt. Aufgrund der 360°-Umfassung des extrudierten Rohres 5 ist es erforderlich, den Durchmesser der Stützvorrichtung 18 im Mittelstück 19 immer etwas größer einzustellen, als den in der Kalibrierhülse 9 eingestellten Durchmesser, um Zwängungen zwischen dem Rohr 5 und der Stützvorrichtung 18 zu vermeiden.

## Patentansprüche

1. Extrusionslinie für Rohre aus Kunststoff mit einer in einem Vakuumtank (8) angeordneten Kalibriervorrichtung (9) und mindestens einer sich daran in Extrusionsrichtung anschließenden Stützvorrichtung (18) mit einer an den Außendurchmesser eines jeweilig extrudierten Rohres (5) anpassbaren Stützkontur, sowie mit einer Sprühdüsen (16) aufweisenden Kühleinrichtung (14) zur Außenkühlung des Rohres (5), **dadurch gekennzeichnet, dass** die Stützvorrichtung (18) ein axial stauch- und ausziehbares Mittelstück (19) aufweist, das aus einem ersten und zweiten Satz flexibler Bänder(20, 21) gebildet ist, die schräg zur Längsachse des extrudierten Rohres (5) verlaufen und zumindest in einem Teilbereich des Außenumfanges am Rohr (5) anliegen, wobei sich die Bänder (20, 21) des ersten und zweiten Satzes nach Art eines Scherengitters kreuzen und an den Kreuzungspunkten gelenkig miteinander verbunden sind.

2. Extrusionslinie nach Anspruch 1, **dadurch gekennzeichnet, dass** die Stützvorrichtung (18) als Halbschale ausgeführt ist.

3. Extrusionslinie nach Anspruch 1, **dadurch gekennzeichnet, dass** Stützvorrichtung (18) als Vollschale ausgeführt ist.

4. Extrusionslinie nach Anspruch 1, **dadurch gekennzeichnet, dass** die Sprühdüsen (16) der Kühleinrichtung (14) an der Stützvorrichtung (18) befestigt sind.

5. Extrusionslinie nach einem der vorstehenden Ansprüche, **dadurch gekennzeichnet, dass** erste Enden der Bänder (21) des einen Satzes gelenkig an einem Einlaufkopf (22) und die zweiten Enden der Bänder (21) des einen Satzes gelenkig an einem Auslaufkopf (23) befestigt sind, wobei der Einlaufkopf (22) ortsfest im Vakuumtank (8) gelagert und der Auslaufkopf (23) gegenüber dem Einlaufkopf (22) axial verstellbar ist.

6. Extrusionslinie nach Anspruch 5, **dadurch gekennzeichnet, dass** die am Einlaufkopf (22) und Auslaufkopf (23) befestigten Enden der Bänder (21) des einen Satzes Übergangsabschnitte (24) des Mittelstücks (19) bilden, die in Abhängigkeit vom Auszugsgrad des Mittelstücks (19) mehr oder weniger konisch verlaufen.

7. Extrusionslinie nach Anspruch 2, **dadurch gekennzeichnet, dass** an den Längsrändern der Stützvorrichtung (18) jeweils eine sich axial erstreckende Halteschiene (27) vorgesehen ist, in denen die Längsränder nach Art einer Kulissenführung gelagert sind.

8. Extrusionslinie nach Anspruch 7, **dadurch gekennzeichnet, dass** an den Kreuzungspunkten zwischen den Bändern (20, 21) des ersten und zweiten Satzes Vorsprünge (28) nach Art von Kulissensteinen vorgesehen sind, die in einer axialen Nut (29) der Halteschienen (27) geführt sind.

9. Extrusionslinie nach einem der vorstehenden Ansprüche, **dadurch gekennzeichnet, dass** die Kontaktfläche des Mittelstücks (19) mit dem Rohr (5) aus einem Material mit guten Gleiteigenschaften, z. B. PTFE, bestehen.
